# EUROPEAN PATENT SPECIFICATION

(11) **EP 3 614 074 B1**
(45) Date of publication and mention of the grant of the patent: **06.04.2022**
(21) Application number: 19185609.5
(22) Date of filing: 10.07.2019
(51) Int. Cl.: F25B 40/00, F28D 7/06, F28F 1/42

(54) **DOUBLE-PIPE EAT EXCHANGER**
DOPPELROHRWÄRMETAUSCHER
ÉCHANGEUR THERMIQUE À DOUBLE TUYAU

(30) Priority: 20.07.2018 JP 2018136713
(43) Date of publication of application: 26.02.2020
(73) Proprietor: Valeo Japan Co., Ltd., Kumagaya-shi, Saitama 360-0193 (JP)
(72) Inventor: ONODERA, Mutsuhiro, SAITAMA, 360-0193 (JP); HAYASHI, Naoto, SAITAMA, 360-0193 (JP)
(74) Representative: Valeo Systèmes Thermiques

(56) References cited:
- EP-A1- 2 431 698
- EP-A2- 2 420 790
- JP-A- 2018 021 699

## Description

### BACKGROUND OF THE INVENTION

### 1. Field of the Invention

The present invention relates to a double-pipe heat exchanger disposed in a refrigeration cycle of a vehicle air conditioner.

### 2. Description of the Related Art

As disclosed in Patent Literatures 1 and 2, a double pipe (double-pipe heat exchanger) that has an inner pie and an outer pipe disposed outside of this inner pipe and that transfers heat between a low-temperature, low-pressure refrigerant flowing to an inner side of the inner pipe and a high-temperature, high-pressure refrigerant flowing between an outer peripheral surface of the inner pipe and an inner peripheral surface of the outer pipe has been conventionally known as a device that enhances the cooling capacity of a refrigeration cycle of a vehicle air conditioner.

The double pipe disclosed in Patent Literature 1 is configured such that a helical fin is inserted into the inner pipe and the low-temperature, low-pressure refrigerant is helically revolved and agitated when the low-temperature, low-pressure refrigerant flows in the fin, and indicates that the efficiency of heat exchange between the low-temperature, low-pressure refrigerant and the high-temperature, high-pressure refrigerant can be improved.

The double pipe disclosed in Patent Literature 2 is configured such that a helical groove is formed in the inner pipe, ridge portions into which the groove is partitioned abut on the inner peripheral surface of the outer pipe, the high-temperature, high-pressure refrigerant is helically revolved and agitated when the high-temperature, high-pressure refrigerant flows between the outer peripheral surface of the inner pipe and the inner peripheral surface of the outer pipe, and indicates that the efficiency of heat exchange between the high-temperature, high-pressure refrigerant and the low-temperature, low-pressure refrigerant can be improved.

Patent Literature 1: JP-A-2018-021699
Patent Literature 2: JP-A-2006-162241

However, the double pipe disclosed in Patent Literature 1 is unable to agitate the refrigerant flowing between the outer peripheral surface of the inner pipe and the inner peripheral surface of the outer pipe while the double pipe can agitate the refrigerant flowing in an inner portion of the inner pipe; thus, the double pipe has room for improvement in the efficiency of heat exchange.

Furthermore, the double pipe disclosed in Patent Literature 2 enables the refrigerant flowing in an inner portion of the inner pipe to flow in such a manner as to produce a short-circuit in an axial direction of the double pipe while the double pipe can agitate the refrigerant flowing between the outer peripheral surface of the inner pipe and the inner peripheral surface of the outer pipe; thus, the double pipe can agitate the refrigerant only insufficiently and has room for improvement in the efficiency of heat exchange. EP 2 431 698 A1 discloses a double-pipe heat exchanger comprising an outer pipe, an inner pipe disposed in an inner portion of the outer pipe, a gap space between an inner peripheral surface in the inner portion of the outer pipe and an outer peripheral surface of the inner pipe which forms a first refrigerant flow passage. The internal space of the inner pipe is the second refrigerant flow passage. The first refrigerant flow passage is helically partitioned. The inner pipe which comprises a helical relief, that does not partition its internal space, enables the refrigerant flowing in the second refrigerant flow passage to flow in the axial direction of the heat exchanger.

Meanwhile, a heat exchanger in which the high-temperature, high-pressure refrigerant flows is a pressure chamber which is a tubular body; thus, an overall shape of the heat exchanger is long and thin and the heat exchanger is required to improve a strength as a structure.

### SUMMARY OF THE INVENTION

An object of the present invention is, therefore, to provide a double pipe that can reliably agitate a flowing refrigerant to improve efficiency of heat exchange and that can improve a structural strength. A double-pipe heat exchanger according to the present invention is defined in claim 1.

According to a preferred embodiment of the present invention, there is provided a double-pipe heat exchanger including:
an outer pipe; an inner pipe disposed in an inner portion of the outer pipe; and a helical member that is disposed in an internal space of the inner pipe and that helically partitions the internal space, wherein a gap space between an inner peripheral surface in the inner portion of the outer pipe and an outer peripheral surface of the inner pipe is a first refrigerant flow passage, the internal space of the inner pipe is a second refrigerant flow passage, a refrigerant flowing in the first refrigerant flow passage flows into the first refrigerant flow passage from the other side of the inner pipe in an axial direction of the inner pipe and then flows out from one side, a refrigerant flowing in the second refrigerant flow passage flows into the second refrigerant flow passage from the one side of the inner pipe in the axial direction and then flows out from the other side, and the first refrigerant flow passage is helically partitioned.

Therefore, not only the refrigerant flowing in the second refrigerant flow passage but also the refrigerant flowing in the first refrigerant flow passage flows while helically rotating; thus, the two refrigerants are agitated and the efficiency of heat exchange is improved. Moreover, not only the helical member is disposed in the second refrigerant flow passage but also the first refrigerant flow passage is helically partitioned so that the first refrigerant flow passage has a helical shape; thus, the structure is strengthened.

Furthermore, the double-pipe heat exchanger is preferably configured such that in a view from the one side to the other side of the inner pipe 30 in the axial direction, a helical rotation direction of the refrigerant flowing in the first refrigerant flow passage is opposite to a helical rotation direction of the refrigerant flowing in the second refrigerant flow passage. In the double pipe, the refrigerant flowing in the first refrigerant flow passage and the refrigerant flowing in the second refrigerant flow passage flow while being opposed to each other; thus, the efficiency of heat exchange is further improved.

Moreover, the double-pipe heat exchanger is preferably configured such that in the axial direction of the inner pipe, a helical pitch of the first refrigerant flow passage is equal to a helical pitch of the helical member. Rationally causing the first refrigerant flow passage and the second refrigerant flow passage to be opposed to each other makes it possible to improve the efficiency of heat exchange.

Furthermore, the double-pipe heat exchanger is preferably configured such that first helical abutting lines that are abutting portions between helical grooves helically partitioning the first refrigerant flow passage and the outer peripheral surface of the inner pipe are opposed to second helical abutting lines that are abutting portions between the helical member and an inner peripheral surface of the inner pipe across the inner pipe. Rationally causing the first refrigerant flow passage and the second refrigerant flow passage to be opposed to each other makes it possible to improve the efficiency of heat exchange.

Moreover, the double-pipe heat exchanger may be configured such that in a view from the one side to the other side of the inner pipe 30 in the axial direction, a helical rotation direction of the refrigerant flowing in the first refrigerant flow passage is equal to a helical rotation direction of the refrigerant flowing in the second refrigerant flow passage. Since the double-pipe heat exchanger can be configured such that the first refrigerant flow passage intersects the second refrigerant flow passage, it is possible to strengthen the structure of the double pipe while improving the efficiency of heat exchange between the refrigerant flowing in the first refrigerant flow passage and the refrigerant flowing in the second refrigerant flow passage.

According to the present invention, it is possible to provide the double pipe heat exchanger that can reliably agitate the flowing refrigerants to improve the efficiency of heat exchange and that can improve a structural strength.

### BRIEF DESCRIPTION OF THE DRAWINGS

FIG. 1 is a schematic configuration diagram illustrating a refrigeration cycle of a vehicle air conditioner in which a double-pipe heat exchanger according to an embodiment of the present invention is disposed.
FIG. 2 is a schematic cross-sectional view of the double-pipe heat exchanger according to a first embodiment.
FIGS. 3A and 3B are explanatory diagrams for explaining flows of refrigerants flowing in an inner portion of the double-pipe heat exchanger according to the first embodiment, where FIG. 3A is a perspective view of the double-pipe heat exchanger viewed from a neighborhood on one side to the other side and FIG. 3B is a partial cross-sectional view of the double-pipe heat exchanger cut to include an axis of an inner pipe.
FIGS. 4A and 4B are explanatory diagrams for explaining flows of refrigerants flowing in an inner portion of a double-pipe heat exchanger according to a second embodiment, where FIG. 4A is a perspective view of the double-pipe heat exchanger viewed from a neighborhood on one side to the other side and FIG. 4B is a partial cross-sectional view of the double-pipe heat exchanger cut to include an axis of an inner pipe.
FIGS. 5A and 5B are explanatory diagrams for explaining a structure of the double-pipe heat exchanger according to the second embodiment, where FIG. 5A is a schematic cross-sectional view of the double-pipe heat exchanger cut perpendicularly to the axis of the inner pipe and viewed from one side to the other side, and FIG. 5B is a partial cross-sectional view of the double-pipe heat exchanger cut to include the axis of the inner pipe.
FIG. 6 is a schematic cross-sectional view of a double-pipe heat exchanger according to a third embodiment.
FIG. 7 is a schematic cross-sectional view of a double-pipe heat exchanger according to a fourth embodiment.

### DESCRIPTION OF THE PREFERRED EMBODIMENTS

Embodiments of a double-pipe heat exchanger according to the present invention will be described hereinafter with reference to the drawings.

It is assumed that constituent elements denoted by the same reference symbols and signs in the present specification and the drawings are mutually identical.

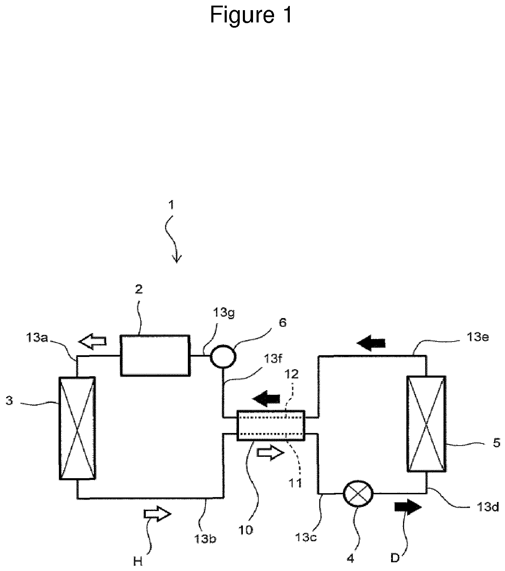

FIG. 1 is a schematic configuration diagram illustrating a refrigeration cycle 1 of a vehicle air conditioner in which a double-pipe heat exchanger 10 according to an embodiment of the present invention is disposed.

In the refrigeration cycle 1 configured in this way, when a compressor 2 is activated, then a high-temperature, high-pressure refrigerant is delivered and arrives at an expanding device 4 by way of a condenser 3 and a high-pressure refrigerant passage 11 of the double-pipe heat exchanger 10 along a flow denoted by white arrows in FIG. 1. The refrigerant expanded by the expanding device 4 is made into a low-temperature, low-pressure refrigerant and the low-temperature, low-pressure refrigerant arrives at the compressor 2 by way of an evaporator 5, a low-pressure refrigerant passage 12 of the double-pipe heat exchanger 10, and an accumulator 6 along a flow denoted by black arrows in FIG. 1. The double-pipe heat exchanger 10 is a member that transfers heat between the high-temperature, high-pressure refrigerant and the low-temperature, low-pressure refrigerant circulating in an inner portion of the refrigeration cycle 1 and is often referred to as an "internal heat exchanger".

FIG. 1 illustrates an example of the refrigeration cycle 1 of the vehicle air conditioner in which the double-pipe heat exchanger 10 described below is disposed.

The refrigeration cycle 1 has the compressor 2 that compresses the refrigerant, the condenser 3 that cools the refrigerant compressed by this compressor 2, the expanding device 4 that reduces the pressure of the refrigerant flowing out from this condenser 3 and that expands the refrigerant, the evaporator 5 that evaporates the refrigerant the pressure of which is reduced by this expanding device 4, and the accumulator 6 that separates the refrigerant flowing out from this evaporator 5 into a gaseous refrigerant and a liquid refrigerant and that discharges the gaseous refrigerant. Furthermore, the double-pipe heat exchanger 10 configured with the high-pressure refrigerant passage 11 in which a refrigerant flows from the condenser 3 to the expanding device 4 and the low-pressure refrigerant passage 12 in which a refrigerant flows from the evaporator 5 to the accumulator 6 is disposed in this refrigeration cycle 1. Disposing the double-pipe heat exchanger 10 makes it possible to reduce an enthalpy of the refrigerant flowing into the evaporator 5 and to enhance a cooling capacity of the refrigeration cycle 1.

The refrigeration cycle 1 is configured to be able to circulate the refrigerants by being configured with a pipe 13a that connects the compressor 2 to the condenser 3 either directly or indirectly, a pipe 13b that connects the condenser 3 to the high-pressure refrigerant passage 11 of the double-pipe heat exchanger 10 either directly or indirectly, a pipe 13c that connects the high-pressure refrigerant passage 11 of the double-pipe heat exchanger 10 to the expanding device 4 either directly or indirectly, a pipe 13d that connects the expanding device 4 to the evaporator 5 either directly or indirectly, a pipe 13e that connects the evaporator 5 to the low-pressure refrigerant passage 12 of the double-pipe heat exchanger 10 either directly or indirectly, a pipe 13f that connects the low-pressure refrigerant passage 12 of the double-pipe heat exchanger 10 to the accumulator 6 either directly or indirectly, and a pipe 13g that connects the accumulator 6 to the compressor 2 either directly or indirectly. While the accumulator 6 is illustrated in this embodiment as a member that separates the refrigerant into a gaseous refrigerant and a liquid refrigerant, a liquid tank may be disposed between the condenser 3 and the high-pressure refrigerant passage 11 of the double-pipe heat exchanger 10 as an alternative to the accumulator 6. Furthermore, while it is described that the refrigeration cycle 1 has a structure configured with the pipe 13d between the expanding device 4 and the evaporator 5, the pipe 13d may be omitted and the expanding device 4 may be directly connected to the evaporator 5.

### <First Embodiment>

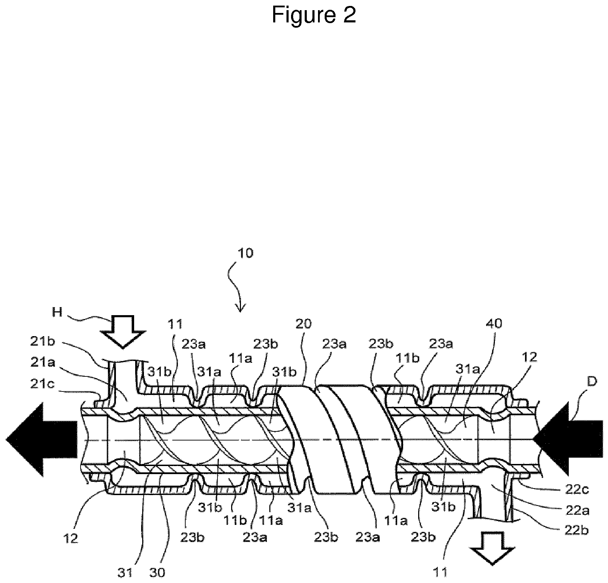

FIG. 2 is a cross-sectional schematic view for explaining the double-pipe heat exchanger 10 illustrated in FIG. 1 as a first embodiment. The double-pipe heat exchanger 10 has an outer pipe 20 and an inner pipe 30 disposed inside of this outer pipe 20, and both the outer pipe 20 and the inner pipe 20 are made of aluminum or aluminum alloy. A gap space between an inner peripheral surface of an inner portion of the outer pipe 20 and an outer peripheral surface of the inner pipe 30 is a first refrigerant flow passage (high-pressure refrigerant passage) 11 in which a first refrigerant (high-temperature, high-pressure refrigerant) flows, and an inner space of the inner pipe 30 is a second refrigerant flow passage (low-pressure refrigerant passage) 12 in which a second refrigerant (low-temperature, low-pressure refrigerant) flows.

The outer pipe 20 is configured with an inlet port 21a into which a high-pressure refrigerant flows, and a high-pressure refrigerant introduction pipe 21b that is connected to the pipe 13b and that introduces the high-pressure refrigerant to the inlet port 21a. The outer pipe 20 is also configured with an outlet port 22a from which the high-pressure refrigerant flows out, and a high-pressure refrigerant discharge pipe 22b that introduces the high-pressure refrigerant discharged from the outlet port 22a to the pipe 13c. An end portion on the other side (left-hand side in FIG. 2) of the outer pipe 20 is a sealing portion 21c that seals an outer periphery of the inner pipe 30, while an end portion on one side (right-hand side in FIG. 2) of the outer pipe 20 is a sealing portion 22c that seals the outer periphery of the inner pipe 30.

A first helical groove 23a and a second helical groove 23b that are of a helical shape and formed recessed toward the inner pipe are formed between the inlet port 21a and the outlet port 22a. The first helical groove 23a and the second helical groove 23b are apart equidistantly. Peak portions of the first helical groove 23a and those of the second helical groove 23b abut on the outer peripheral surface of the inner pipe 30. The high-pressure refrigerant passage 11 is thereby partitioned into a first high-pressure refrigerant flow passage 11a and a second high-pressure refrigerant flow passage 11b and formed helically around the outer peripheral surface of the inner pipe 30.

An end portion (not shown) on one side of the inner pipe 30 is connected to the pipe 13e, while an end portion (not shown) on the other side of the inner pipe 30 is connected to the pipe 13f.

A helical member 40 that helically partitions an internal space 31 of the inner pipe 30 is disposed in this internal space 31. The helical member 40 is formed with aluminum or aluminum alloy. Alternatively, the helical member 40 is formed with resin such as polypropylene. The helical member 40 is formed such that a planar plate member is twisted along an axial direction of the inner pipe 30. End portions of the helical member 40 in a radial direction abut on the inner peripheral surface of the inner pipe 3. The internal space 31 of the inner pipe 30 is thereby partitioned into a first helical space 31a and a second helical space 31b each of a helical shape.

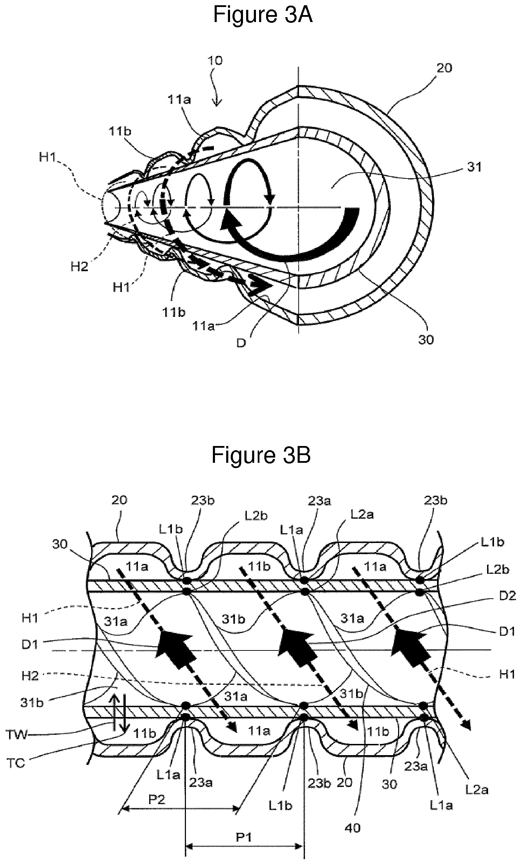

FIGS. 3A and 3B are explanatory diagrams for explaining flows of the refrigerants flowing in the inner portion of the double-pipe heat exchanger illustrated in FIG. 2, where FIG. 3A is a perspective view of the double-pipe heat exchanger viewed from a neighborhood on one side to the other side, and FIG. 3B is a partial cross-sectional view of the double-pipe heat exchanger.

In FIG. 3A, the helical member 40 is not shown. The high-pressure refrigerant flowing into the other side of the first refrigerant flow passage (high-pressure refrigerant flow passage) 11 via the high-pressure refrigerant introduction pipe 21b and the inlet port 21a moves in the axial direction of the inner pipe 30 while being revolved helically about the outer periphery of the inner pipe 30 as denoted by dotted lines H1 and H2 and flows toward one side of the high-pressure refrigerant flow passage 11. The flow H1 denotes the high-pressure refrigerant flowing in the first high-pressure refrigerant flow passage 11a and the flow H2 denotes the high-pressure refrigerant flowing in the second high-pressure refrigerant flow passage 11b. In an example of FIG. 3A, the flows H of the high-pressure refrigerant rotate counterclockwise in a view from one side to the other side of the inner pipe 30 in the axial direction thereof.

On the other hand, in the inner pipe 30, the low-pressure refrigerant flowing into the end portion on one side of the low-pressure refrigerant flow passage 12 moves in the axial direction of the inner pipe 30 while being revolved helically in the internal space 31 of the inner pipe 30 and flows toward the other side of the low-pressure refrigerant flow passage 12 as denoted by a solid line D. In the example of FIG. 3A, the flow D of the low-pressure refrigerant rotates clockwise in a view from one side to the other side of the inner pipe 30 in the axial direction thereof. In other words, a rotation direction of the flows H of the high-pressure refrigerant is opposite to that of the flow D of the low-pressure refrigerant.

In FIG. 3A, the low-pressure refrigerant flows helically as denoted by the flow D and the high-pressure refrigerant also flows helically as denoted by the flows H1 and H2 and the low-pressure refrigerant and the high-pressure refrigerant are agitated; thus, efficiency of heat exchange of this double-pipe heat exchanger 10 is improved. Furthermore, as illustrated in FIG. 3B, the double-pipe heat exchanger 10 is configured such that the peaks of the first helical groove 23a and those of the second helical groove 23b abut on the outer peripheral surface of the inner pipe 30; thus, the outer pipe 20 and the inner pipe 30 contact each other entirely in an axial direction of the double-pipe heat exchanger 10 and a mechanical strength can be improved.

FIG. 3B is a partial cross-sectional view of the double-pipe heat exchanger 10 partially cut to include the axis of the inner pipe, black arrows D1 and D2 denote the flow of the low-pressure refrigerant flowing forward of the helical member 40 on a paper sheet, and dotted arrows H1 and H2 denote the flow of the high-pressure refrigerant flowing forward of the inner pipe 30 on the paper sheet. The double-pipe heat exchanger 10 is configured such that first helical abutting lines L1a and L1b that are abutting portions between the peaks of the first helical groove 23a and the second helical groove 23b and the outer peripheral surface of the inner pipe 30 are opposed to second helical abutting lines L2a and L2b that are abutting portions between the helical member 40 and the inner peripheral surface of the inner pipe 30 across the inner pipe 30. Furthermore, a helical pitch P1 of the first refrigerant flow passage 11 that is a dimension between the first line L1a out of the first helical abutting lines that is the abutting line between each peak of the first helical groove 23a and the outer peripheral surface of the inner pipe 30 and the second line L1b out of the first helical abutting lines that is the abutting line between each peak of the second helical groove 23b and the outer peripheral surface of the inner pipe 30 is set equivalent to a pitch P2 of the second helical abutting lines that are the abutting lines between the helical member 40 and the inner peripheral surface of the inner pipe 30.

As illustrated in FIG. 3B, the flow H1 of the high-pressure refrigerant and the flow D1 of the low-pressure refrigerant are opposed flows and the flow H2 of the high-pressure refrigerant and the flow D2 of the low-pressure refrigerant are opposed flows generally in all courses in which the high-pressure refrigerant and the low-pressure refrigerant flow in the double-pipe heat exchanger 10. It is thus possible to effectively improve the efficiency of heat exchange.

Configuring the double-pipe heat exchanger such that the first helical abutting lines L1a and L1b are opposed to the second helical abutting lines L2a and L2b across the inner pipe 30, in particular, makes it possible to oppose the high-pressure refrigerant flow passage to the low-pressure refrigerant flow passage, to make smooth the movement of relatively low heat TC to the high-pressure refrigerant and movement of relatively high heat TW to the low-pressure refrigerant, and to effectively improve the efficiency of heat exchange.

The double-pipe heat exchanger according to the first embodiment is manufactured as follows. First, a metal plane plate that forms basis for the helical member 40 is twisted or the helical member 40 of the helical shape is prepared by a resin molding process. Next, the helical member 40 is inserted into the inner pipe 30. At this time, an outside diameter of the helical member 40 is preferably slightly larger than a diameter of the inner peripheral surface of the inner pipe 30. After insertion of the helical member 40 into the inner pipe 30, movement of a position of the helical member 40 in a rotation direction thereof can be restricted. After insertion of the helical member 40 into the inner pipe 30, the inner pipe 30 in the neighborhoods of outer sides of two end portions of the helical member 40 is subjected to a shrinkage process and movement of a position of the helical member 40 in the axial direction thereof is restricted.

Next, the inner pipe 30, into which the helical member 40 is inserted, is inserted into an inner side of the outer pipe 20 in which the inlet port 21a and the outlet port 22a are formed. After insertion of the inner pipe 30 into a predetermined position, one end portion and the other end portion of the outer pipe are subjected to a shrinkage process to form the sealing portions 21c and 22c. Next, helical grooves are configured in the outer peripheral surface of the outer pipe 30 partially in a depressed fashion using a dedicated tool or device. In this first embodiment, two helical grooves that do not intersect each other are formed. Through this process, the first refrigerant flow passage (high-pressure refrigerant flow passage) 11 is partitioned into the first high-pressure refrigerant flow passage 11a and the second high-pressure refrigerant flow passage 11b.

Finally, the high-pressure refrigerant introduction pipe 21b and the high-pressure refrigerant discharge pipe 22b are mounted in the inlet port 21a and the outlet port 22a, respectively. For example, a brazing technique is used for mounting. A process for bending the double-pipe heat exchanger may be added before or after mounting the high-pressure refrigerant introduction pipe 21b and the high-pressure refrigerant discharge pipe 22b as needed. However, a material that can resist bending is selected to prevent occurrence of breaking or damage due to the bending. For example, aluminum, aluminum alloy, or an elastic material is used for the helical member 40.

### <Second Embodiment>

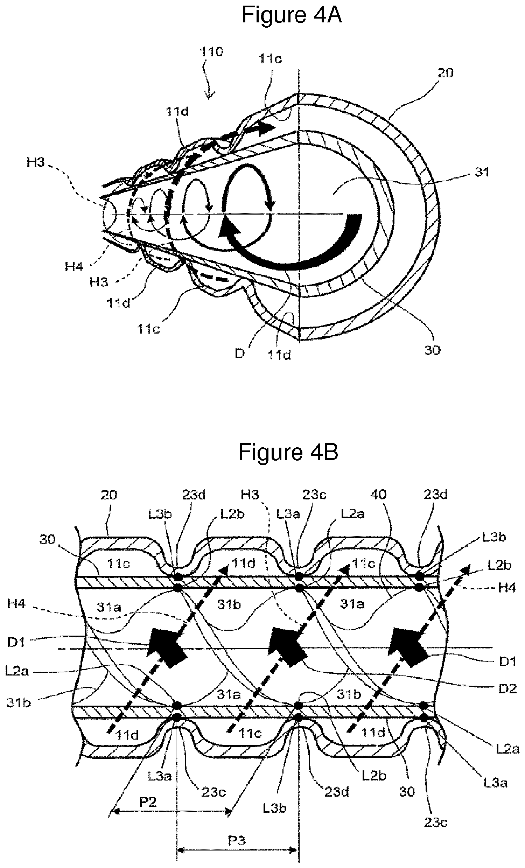

While the first embodiment of the present invention has been described so far, a second embodiment will be described with reference to FIGS. 4A and 4B.

FIGS. 4A and 4B illustrate a double-pipe heat exchanger 110 configured with a third helical groove 23c and a fourth helical groove 23d as an alternative to the first helical groove 23a and the second helical groove 23b formed in the outer pipe 30 in the double-pipe heat exchanger illustrated in FIG. 2. As illustrated in FIG. 4B, the first refrigerant flow passage (high-pressure refrigerant flow passage) 11 is helically partitioned into a third high-pressure refrigerant flow passage 11c and a fourth high-pressure refrigerant flow passage 11d by the third helical groove 23c and the fourth helical groove 23d.

Similarly in FIG. 4A, the helical member 40 is omitted. The high-pressure refrigerant flowing into the other side of the first refrigerant flow passage (high-pressure refrigerant flow passage) 11 via the high-pressure refrigerant introduction pipe 21b and the inlet port 21a moves in the axial direction of the inner pipe 30 while being revolved helically about the outer periphery of the inner pipe 30 as denoted by dotted lines H3 and H4 and flows toward one side of the high-pressure refrigerant flow passage 11. The flow H3 denotes the high-pressure refrigerant flowing in the third high-pressure refrigerant flow passage 11c and the flow H4 denotes the high-pressure refrigerant flowing in the fourth high-pressure refrigerant flow passage 11d. In an example of FIG. 4A, the flows H of the high-pressure refrigerant rotate clockwise in a view from one side to the other side of the inner pipe 30 in the axial direction thereof.

Similarly in FIG. 4A, the low-pressure refrigerant flows helically as denoted by the flow D and the high-pressure refrigerant also flows helically as denoted by the flows H3 and H4 and the low-pressure refrigerant and the high-pressure refrigerant are agitated; thus, the efficiency of heat exchange of this double-pipe heat exchanger 110 is improved. Furthermore, as illustrated in FIG. 4B, the double-pipe heat exchanger 110 is configured such that peaks of the third helical groove 23c and those of the fourth helical groove 23d abut on the outer peripheral surface of the inner pipe 30; thus, the outer pipe 20 and the inner pipe 30 contact each other entirely in an axial direction of the double-pipe heat exchanger 110 and a mechanical strength can be, therefore, improved.

FIG. 4B is a cross-sectional view illustrating part of the double-pipe heat exchanger 110, the black arrows D1 and D2 denote the flow of the low-pressure refrigerant flowing forward of the helical member 40 on a paper sheet, and dotted arrows H3 and H4 denote the flow of the high-pressure refrigerant flowing forward of the inner pipe 30 on the paper sheet. A helical pitch P3 of the first refrigerant flow passage 11 that is a dimension between a first line L3a out of third helical abutting lines that is the abutting line between each peak of the third helical groove 23c and the outer peripheral surface of the inner pipe 30 and the second line L1b out of the first helical abutting lines that is the abutting line between each peak of the second helical groove 23b and the outer peripheral surface of the inner pipe 30 is set equivalent to the pitch P2 of the second helical abutting lines that are the abutting lines between the helical member 40 and the inner peripheral surface of the inner pipe 30.

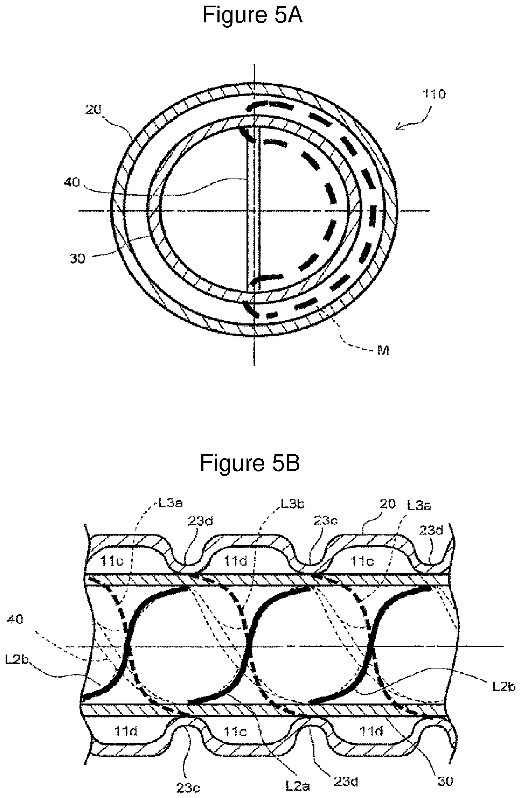

FIG. 5A is a schematic cross-sectional view of the double-pipe heat exchanger 110 according to the second embodiment cut perpendicularly to the axis of the inner pipe 30 and viewed from one side to the other side. Furthermore, FIG. 5B is a partial cross-sectional view of this double-pipe heat exchanger 110 cut to include the axis of the inner pipe. With reference to FIG. 5B, structures of the third helical abutting lines (L3a and L3b) and the second helical abutting lines (L2a and L2b) on a thick dotted line M illustrated in FIG. 5A will be described.

In FIG. 5B, the first line L3a out of the third helical abutting lines that is the abutting line between each peak of the third helical groove 23c and the outer peripheral surface of the inner pipe 30 and the second line L3b out of the third helical abutting lines that is the abutting line between each peak of the fourth helical groove 23d and the outer peripheral surface of the inner pipe 30 are denoted by thick dotted lines . In addition, in FIG. 5B, the second helical abutting lines L2a and L2b that are the abutting lines between the helical member 40 and the inner peripheral surface of the inner pipe 30 are denoted by thick solid lines. As can be understood from FIG. 5B, the third helical abutting lines L3a and L3b intersect the second helical abutting lines L2a and L2b. In this way, causing the third helical abutting lines L3a and L3b that are portions in which the outer pipe 20 abuts on the inner pipe 30 to intersect the second helical abutting lines L2a and L2b that are portions in which the helical member 40 abuts on the inner pipe 30 makes it possible to more reliably improve a mechanical strength of the double-pipe heat exchanger 110.

### <Third embodiment>

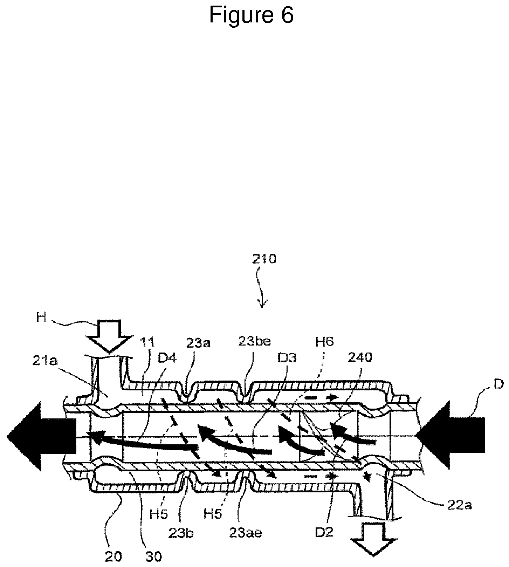

A third embodiment will next be described with reference to FIG. 6.

A double-pipe heat exchanger 210 in this embodiment is similarly configured with the outer pipe 20, the inner pipe 30, and a helical member 240 that is disposed in the internal space of the inner pipe and that helically partitions the internal space.

The first helical groove 23a and the second helical groove 23b that are of the helical shape and formed recessed toward the inner pipe are formed between the inlet port 21a and the outlet port 22a. Here, the first helical groove 23a and the second helical groove 23b of the helical shape are not formed entirely between the inlet port 21a and the outlet port 22a and not formed in portions proximate to the outlet port 22a. Owing to this, the high-pressure refrigerant H flowing from the inlet port 21a flows first as a helical flow H5 since the high-pressure refrigerant passage 11 is helically partitioned by the first helical groove 23a and the second helical groove 23b in the vicinity of the inlet port 21a. Next, after passing through helical grooves 23ae and 23be farthest from the inlet port 21a, the high-pressure refrigerant H flows as a helical flow H6 that is a flow toward the helical outlet port 22a along the axial direction, compared with the helical flow H5, while keeping an impetus of the helical flow (impetus of the flow in a circumferential direction) to a certain extent. In other words, the high-pressure refrigerant flowing from the inlet port 21a flows toward the outlet port 22a while the high-pressure refrigerant is agitated and an increase in a passage resistance is suppressed.

The helical member 240 disposed in the internal space of the inner pipe 30 has a length in a direction along the axial direction sufficiently smaller than a length of the inner pipe 30 in the axial direction and is disposed in the vicinity of the end portion on one side of the inner pipe 30. The helical member 240 is preferably configured such that the low-pressure refrigerant flowing from the end portion on one side of the inner pipe 30 rotates 180° or more. If the helical member 240 is configured such that the low-pressure refrigerant rotates less than 180°, components of the low-pressure refrigerant flowing from the end portion on one side of the inner pipe 30 and flowing linearly in the axial direction of the inner pipe remain, possibly resulting in an inefficient agitation effect.

When the low-pressure refrigerant D flows into the inner pipe 30, in which such a short helical member 240 is disposed, from one side, the low-pressure refrigerant D flows first as a helical flow D2. Next, the low-pressure refrigerant passing through the helical member 240 flows toward the other side of the inner pipe while the impetus of the helical flow (flow of the impetus in the circumferential direction) is kept to a certain extent and a flow direction of the helical flow is gradually changed to the direction along the axial direction of the inner pipe 30 as denoted by helical flows D3 and D4. In other words, the high/low-pressure refrigerant flowing from one side (right-hand side in FIG. 6) flows toward the other side (left-hand side in FIG. 6) while the low-pressure refrigerant is agitated and the increase in the passage resistance is suppressed.

In this way, the double-pipe heat exchanger 210 according to the third embodiment can suppress the increase in the passage resistance while improving the efficiency of heat exchange.

### <Fourth embodiment>

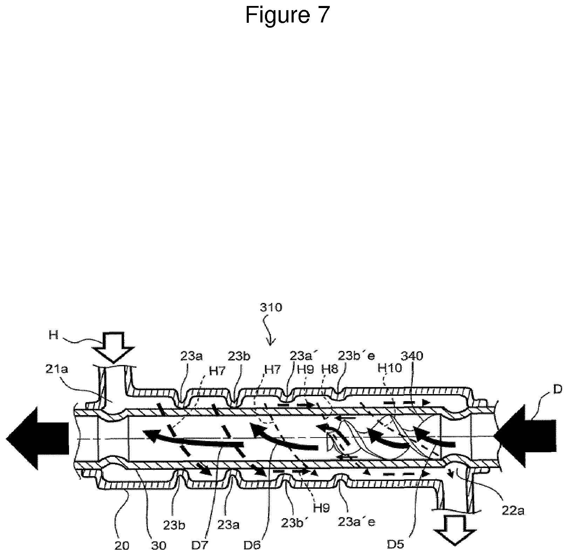

A fourth embodiment will next be described with reference to FIG. 7.

A double-pipe heat exchanger 310 in this embodiment is similarly configured with the outer pipe 20, the inner pipe 30, and a helical member 340 that is disposed in the internal space of the inner pipe and that helically partitions the internal space.

The first helical groove 23a and the second helical groove 23b that are of the helical shape and formed recessed toward the inner pipe are formed between the inlet port 21a and the outlet port 22a. Here, the first helical groove 23a and the second helical groove 23b of the helical shape are not formed entirely between the inlet port 21a and the outlet port 22a and not formed in portions proximate to the outlet port 22a. So far, the fourth embodiment is similar to the third embodiment.

The first helical groove 23a and the second helical groove 23b of the helical shape are formed as a first helical groove 23a' and a second helical groove 23b' having peak portions apart from the outer peripheral surface of the inner pipe 30 in an intermediate location between the inlet port 21a and the outlet port 22a of the outer pipe 20 (which means not only the intermediate location in a strict sense but also neighborhoods of a central portion of the double-pipe heat exchanger in the axial direction thereof) . Owing to this, the high-pressure refrigerant H flowing from the inlet port 21a flows first as a helical flow H7 since the high-pressure refrigerant passage 11 is helically partitioned by the first helical groove 23a and the second helical groove 23b in the vicinity of the inlet port 21a. Next, after arriving at the first helical groove 23a' and the second helical groove 23b' having the peak portions apart from the outer peripheral surface of the inner pipe 30, the high-pressure refrigerant H flows as a helical flow H8 generally equivalent in helical direction to the helical flow H7 but smaller in flow rate than the helical flow H7 and as an axial flow H9 flowing in gaps between the peak portions of the first helical groove 23a' and of the second helical groove 23b' and the outer peripheral surface of the inner pipe 30. Furthermore, after passing through helical grooves 23a' e and 23b' e farthest from the inlet port 21a, the high-pressure refrigerant H flows as a helical flow H10 that is a flow toward the helical outlet port 22a along the axial direction, compared with the helical flow H8, while keeping the impetus of the helical flow (impetus of the flow in the circumferential direction) to a certain extent. Even with such a configuration, the high-pressure refrigerant H can flow while the impetus of the helical flow is kept to a certain extent and an increase in the passage resistance of the high-pressure refrigerant H can be suppressed.

The helical member 340 disposed in the internal space of the inner pipe 30 has a length in a direction along the axial direction sufficiently smaller than the length of the inner pipe 30 in the axial direction and is disposed in the vicinity of the end portion on one side of the inner pipe 30. A diameter of the helical member 340 is formed such that the low-pressure refrigerant D flowing from the end portion on one side of the inner pipe 30 rotates 180° or more and that the diameter then gradually decreases toward the other side. The low-pressure refrigerant D flowing from the end portion on one side of the inner pipe 30 flows as a helical flow D5 and then flows toward the other side of the inner pipe while a flow direction of the helical flow is gradually changed to the direction along the axial direction of the inner pipe 30 as denoted by helical flows D6 and D7. Even with such a configuration, the low-pressure refrigerant can flow while the impetus of the helical flow is kept to a certain extent and an increase in the passage resistance of the low-pressure refrigerant D can be suppressed.

### <Other embodiments>

While the present invention has been described so far using the embodiments such that the outer pipe has the first helical groove 23a and the second helical groove 23b formed recessed toward the inner pipe, the other embodiment may be adopted without departure from the scope of the present invention which is solely defined by the appended claims. For example, a helical fin (not shown) that helically partitions a space of this high-pressure refrigerant passage 11 and that is a separate member from the outer pipe 20 and the inner pipe 30 may be disposed in the high-pressure refrigerant passage 11. This can dispense with a process for forming the first helical groove 23a and the second helical groove 23b in the outer pipe 30.

### Description of Reference Numerals and Signs

1: Refrigeration cycle
2: Compressor
3: Condenser
4: Expanding device
5: Evaporator
6: Accumulator
10, 110, 210, 310: Double-pipe heat exchanger
11: First refrigerant flow passage (high-pressure refrigerant flow passage)
11a: First high-pressure refrigerant flow passage
11b: Second high-pressure refrigerant flow passage
11c: Third high-pressure refrigerant flow passage
11d: Fourth high-pressure refrigerant flow passage
12: Second refrigerant flow passage (low-pressure refrigerant flow passage)
13a, 13b, 13c, 13d, 13e, 13f, 13g: Pipe
20: Outer pipe
21a: Inlet port
21b: High-pressure refrigerant introduction pipe
21c: Sealing portion
22a: Outlet port
22b: High-pressure refrigerant discharge pipe
22c: Sealing portion
23a: First helical groove
23b: Second helical groove
23c: Third helical groove
23d: Fourth helical groove
30: Inner pipe
31: Internal space of inner pipe
31a: First helical space
31b: Second helical space
40, 240, 340: Helical member
D, D1 to D7: Flow of low-pressure refrigerant
H, H1 to H10: Flow of high-pressure refrigerant
P1, P3: Helical pitch of first refrigerant flow passage
P2: Helical pitch of helical member

## Claims

1. A double-pipe heat exchanger (10, 110, 210, 310) comprising:
an outer pipe (20);
an inner pipe (30) disposed in an inner portion of the outer pipe; and
a helical member (40, 240, 340) that is disposed in an internal space (31) of the inner pipe and that helically partitions the internal space, wherein
a gap space between an inner peripheral surface in the inner portion of the outer pipe and an outer peripheral surface of the inner pipe is a first refrigerant flow passage (11),
the internal space of the inner pipe is a second refrigerant flow passage (12),
wherein the double- pipe heat exchanger is configured such that
a refrigerant flowing in the first refrigerant flow passage (11) flows into the first refrigerant flow passage (11) from the other side of the inner pipe (30) in an axial direction of the inner pipe (30) and then flows out from one side, and such that
a refrigerant flowing in the second refrigerant flow passage (12) flows into the second refrigerant flow passage (12) from the one side of the inner pipe (30) in the axial direction and then flows out from the other side,
wherein
the first refrigerant flow passage (11) is helically partitioned so that the first refrigerant flow passage has a helical shape, and
wherein the first refrigerant flow passage and the second refrigerant flow passage are configured such that
the refrigerant flowing in the second refrigerant flow passage and the refrigerant flowing in the first refrigerant flow passage flow while helically rotating.

2. The double-pipe heat exchanger according to claim 1, wherein
in a view from the one side to the other side of the inner pipe (30) in the axial direction, a helical rotation direction of the refrigerant flowing in the first refrigerant flow passage (11) is opposite to a helical rotation direction of the refrigerant flowing in the second refrigerant flow passage (12) .

3. The double-pipe heat exchanger according to claim 2, wherein
in the axial direction of the inner pipe, a helical pitch (P1) of the first refrigerant flow passage (11) is equal to a helical pitch (P2) of the helical member (40).

4. The double-pipe heat exchanger according to claim 3, wherein
first helical abutting lines (L1a, L1b) that are abutting portions between helical grooves (23a, 23b) helically partitioning the first refrigerant flow passage (11) and the outer peripheral surface of the inner pipe (30) are opposed to second helical abutting lines (L2a, L2b) that are abutting portions between the helical member (40) and an inner peripheral surface of the inner pipe (30) across the inner pipe (30) .

5. The double-pipe heat exchanger according to claim 1, wherein
in a view from the one side to the other side of the inner pipe (30) in the axial direction, a helical rotation direction of the refrigerant flowing in the first refrigerant flow passage is equal to a helical rotation direction of the refrigerant flowing in the second refrigerant flow passage.

## Patentansprüche

1. Doppelrohrwärmetauscher (10, 110, 210, 310), umfassend:
ein äußeres Rohr (20);
ein inneres Rohr (30), das in einem inneren Abschnitt des äußeren Rohrs angeordnet ist; und
ein spiralförmiges Element (40, 240, 340), das in einem Innenraum (31) des inneren Rohrs angeordnet ist und das den Innenraum spiralförmig unterteilt, wobei ein Zwischenraum zwischen einer Innenumfangsfläche in dem inneren Abschnitt des äußeren Rohrs und einer Außenumfangsfläche des inneren Rohrs ein erster Kältemittelströmungskanal (11) ist,
der Innenraum des inneren Rohrs ein zweiter Kältemittelströmungskanal (12) ist,
wobei der Doppelrohrwärmetauscher derart ausgelegt ist,
dass
ein Kältemittel, das in dem ersten Kältemittelströmungskanal (11) strömt, in den ersten Kältemittelströmungskanal (11) von der anderen Seite des inneren Rohrs (30) in einer axialen Richtung des inneren Rohrs (30) strömt und dann von einer Seite hinausströmt,
und dadurch, dass
ein Kältemittel, das in dem zweiten Kältemittelströmungskanal (12) strömt, in den zweiten Kältemittelströmungskanal (12) von der einen Seite des inneren Rohrs (30) in der axialen Richtung strömt und dann von der anderen Seite hinausströmt,
wobei
der erste Kältemittelströmungskanal (11) spiralförmig unterteilt ist, so dass der erste Kältemittelströmungskanal eine Spiralform aufweist, und
wobei der erste Kältemittelströmungskanal und der zweite Kältemittelströmungskanal derart ausgelegt sind, dass das in dem zweiten Kältemittelströmungskanal strömende Kältemittel und das in dem ersten Kältemittelströmungskanal strömende Kältemittel strömen,
während sie sich spiralförmig drehen.

2. Doppelrohrwärmetauscher nach Anspruch 1, wobei bei Ansicht von der einen Seite zu der anderen Seite des inneren Rohrs (30) in der axialen Richtung eine Spiraldrehungsrichtung des in dem ersten Kältemittelströmungskanal (11) strömenden Kältemittels entgegengesetzt zu einer Spiraldrehungsrichtung des in dem zweiten Kältemittelströmungskanal (12) strömenden Kältemittels ist.

3. Doppelrohrwärmetauscher nach Anspruch 2, wobei in der axialen Richtung des inneren Rohrs eine spiralförmige Teilung (P1) des ersten Kältemittelströmungskanals (11) gleich zu einer spiralförmigen Teilung (P2) des spiralförmigen Elements (40) ist.

4. Doppelrohrwärmetauscher nach Anspruch 3, wobei erste angrenzende Spirallinien (L1a, L1b), die an Abschnitte zwischen Spiralnuten (23a, 23b) angrenzen, die den ersten Kältemittelströmungskanal (11) und die Außenumfangsfläche des inneren Rohrs (30) spiralförmig unterteilen, entgegengesetzt zu zweiten angrenzenden Spirallinien (L2a, L2b) sind, die an Abschnitte zwischen dem spiralförmigen Element (40) und einer Innenumfangsfläche des inneren Rohrs (30) über das innere Rohr (30) angrenzen.

5. Doppelrohrwärmetauscher nach Anspruch 1, wobei bei Ansicht von der einen Seite zu der anderen Seite des inneren Rohrs (30) in der axialen Richtung eine Spiraldrehungsrichtung des in dem ersten Kältemittelströmungskanal strömenden Kältemittels gleich zu einer Spiraldrehungsrichtung des in dem zweiten Kältemittelströmungskanal strömenden Kältemittels ist.

## Revendications

1. Échangeur thermique à double tuyau (10, 110, 210, 310) comprenant :
un tuyau externe (20) ;
un tuyau interne (30) disposé dans une portion interne du tuyau externe ; et
un élément hélicoïdal (40, 240, 340) qui est disposé dans un espace interne (31) du tuyau interne et qui partage de façon hélicoïdale l'espace interne, dans lequel
un espace formant écart entre une surface périphérique interne dans la portion interne du tuyau externe et une surface périphérique externe du tuyau interne est un premier passage d'écoulement de réfrigérant (11),
l'espace interne du tuyau interne est un deuxième passage d'écoulement de réfrigérant (12),
l'échangeur thermique à double tuyau étant configuré de telle sorte qu'un réfrigérant s'écoulant dans le premier passage d'écoulement de réfrigérant (11) entre en s'écoulant dans le premier passage d'écoulement de réfrigérant (11) à partir de l'autre côté du tuyau interne (30) dans une direction axiale du tuyau interne (30) et ensuite sorte en s'écoulant d'un côté, et de telle sorte
qu'un réfrigérant s'écoulant dans le deuxième passage d'écoulement de fluide réfrigérant (12) entre en s'écoulant dans le deuxième passage d'écoulement de réfrigérant (12) à partir d'un côté du tuyau interne (30) dans la direction axiale et ensuite sorte en s'écoulant de l'autre côté,
le premier passage d'écoulement de réfrigérant (11) étant partagé de façon hélicoïdale, de sorte que le premier passage d'écoulement de réfrigérant ait une forme hélicoïdale, et
le premier passage d'écoulement de réfrigérant et le deuxième passage d'écoulement de réfrigérant étant configurés de telle sorte que le réfrigérant s'écoulant dans le deuxième passage d'écoulement de réfrigérant et
le réfrigérant s'écoulant dans le premier passage d'écoulement de réfrigérant s'écoulent tout en étant en rotation de façon hélicoïdale.

2. Échangeur thermique à double tuyau selon la revendication 1, dans lequel
dans une vue d'un côté à l'autre côté du tuyau interne (30) dans la direction axiale, une direction de rotation hélicoïdale du réfrigérant s'écoulant dans le premier passage d'écoulement de réfrigérant (11) est opposée à une direction de rotation hélicoïdale du réfrigérant s'écoulant dans le deuxième passage d'écoulement de réfrigérant (12).

3. Échangeur thermique à double tuyau selon la revendication 2, dans lequel
dans la direction axiale du tuyau interne, un pas hélicoïdal (P1) du premier passage d'écoulement de réfrigérant (11) est égal à un pas hélicoïdal (P2) de l'élément hélicoïdal (40).

4. Échangeur thermique à double tuyau selon la revendication 3, dans lequel
des premières lignes de butée hélicoïdales (L1a, L1b) qui sont des portions de butée entre des rainures hélicoïdales (23a, 23b) partageant de façon hélicoïdale le premier passage d'écoulement de réfrigérant (11) et la surface périphérique externe du tuyau interne (30) sont opposées à des deuxièmes lignes de butée hélicoïdales (L2a, L2b) qui sont des portions de butée entre l'élément hélicoïdal (40) et une surface périphérique interne du tuyau interne (30) d'un bout à l'autre du tuyau interne (30).

5. Échangeur thermique à double tuyau selon la revendication 1, dans lequel
dans une vue d'un côté à l'autre côté du tuyau interne (30) dans la direction axiale, une direction de rotation hélicoïdale du réfrigérant s'écoulant dans le premier passage d'écoulement de réfrigérant est égale à une direction de rotation hélicoïdale du réfrigérant s'écoulant dans le deuxième passage d'écoulement de réfrigérant.
